# FASCICULE DE BREVET EUROPEEN

(11) **EP 3 118 070 B1**
(45) Date de publication et mention de la délivrance du brevet: **19.09.2018**
(21) Numéro de dépôt: 16178727.0
(22) Date de dépôt: 08.07.2016
(51) Int. Cl.: B60S 1/40

(54) **ORGANE POUR UN SYSTÈME DE CONNEXION D'UN BALAI D'ESSUIE-GLACE**
ORGAN FÜR EIN VERBINDUNGSSYSTEM EINES WISCHERBLATTS
ELEMENT FOR A CONNECTION SYSTEM OF A WINDSCREEN WIPER BRUSH

(30) Priorité: 17.07.2015 FR 1556816
(43) Date de publication de la demande: 18.01.2017
(73) Titulaire: Valeo Systèmes d'Essuyage, 78322 Le Mesnil Saint Denis (FR)
(72) Inventeur: MOULEYRE, Guillaume, 63122 Saint Genès Champanelle (FR); GAUCHER, Vincent, 63720 ENNEZAT (FR)
(74) Mandataire: Callu-Danseux, Violaine

(56) Documents cités:
- DE-A1-102009 029 469
- DE-A1-102011 053 090
- KR-B1- 101 426 005
- US-A1- 2014 041 143

## Description

### DOMAINE TECHNIQUE

La présente invention concerne notamment un organe pour un système de connexion d'un balai d'essuie-glace, en particulier de véhicule automobile.

### ETAT DE L'ART

On connait du document US 2014/041143 A1 un organe selon le préambule de la revendication 1.

Une automobile est classiquement équipée d'essuie-glaces pour assurer un lavage du pare-brise et éviter que la vision qu'a le conducteur de son environnement ne soit perturbée. Ces essuie-glaces comprennent en général un bras d'entrainement, effectuant un mouvement de va-et-vient angulaire, et des balais allongés, porteurs eux-mêmes de lames racleuses réalisées en une matière élastique. Ces lames frottent contre le pare-brise et évacuent l'eau en l'amenant en dehors du champ de vision du conducteur. Les balais sont réalisés sous la forme, soit, dans une version classique, d'étriers articulés qui tiennent la lame racleuse en plusieurs endroits discrets en lui conférant un cintrage lui permettant d'épouser l'éventuelle courbure du pare-brise, soit, dans une version plus récente dénommée *"flat blade"* (pour "lame plate"), d'un ensemble semi-rigide qui maintient la lame racleuse sur toute sa longueur grâce à une ou des vertèbres de cintrage permettant d'appliquer le balai sur le pare-brise sans avoir à utiliser d'étriers.

Dans les deux solutions, le balai est rattaché au bras d'entraînement par un système de connexion comportant un connecteur et un adaptateur. Le connecteur est une pièce qui est solidarisée au balai et qui est en général fixée directement sur la lame racleuse ou sur la *flat blade,* alors que l'adaptateur est solidaire du bras. L'adaptateur est une pièce intermédiaire qui permet la liaison et la fixation du connecteur sur le bras d'entraînement. Il est en général configuré pour être engagé dans une tête ou pièce terminale en forme de chape et à section transversale en U du bras d'entraînement.

Chacun de ces organes (connecteur et adaptateur) comprend des moyens d'articulation configurés pour coopérer avec des moyens complémentaires de l'autre organe, pour définir au moins un axe transversal d'articulation des organes, qui est un axe d'articulation du balai vis-à-vis du bras. Dans la technique actuelle, l'un des organes, tels que le connecteur, comprend en général un axe physique sensiblement cylindrique qui définit l'axe d'articulation et qui est reçu dans un logement de forme complémentaire de l'autre organe.

L'adaptateur comporte en général un corps configuré pour être engagé dans la pièce terminale du bras de façon à ce que ce corps s'étende au moins en partie entre deux jambes latérales sensiblement parallèles de la pièce terminale. Le corps de l'adaptateur est relié à une extrémité à un carénage ou capotage, appelée couramment tête ou casquette, sur laquelle l'extrémité libre de la pièce terminale vient en butée. Enfin, le corps de l'adaptateur comprend en général un bouton d'actionnement qui est engagé par encliquetage élastique dans un orifice ou une encoche de la pièce terminale, lorsque cette dernière est en butée sur la tête, afin de verrouiller l'adaptateur vis-à-vis de la pièce terminale dans cette position.

Un adaptateur permet d'associer un balai à un type particulier de pièce terminale. Dans le cas des pièces terminales précitées à section en U par exemple, il en existe plusieurs variétés. Ces variétés sont très proches en apparence mais diffèrent les unes des autres par des dimensions et en particulier par leurs largeurs ou dimensions latérales, la largeur d'une pièce terminale étant définie par la distance entre les jambes latérales de la pièce terminale et plus exactement par la distance entre les faces externes de ces jambes latérales. Elles varient également par les positions des orifices ou des encoches destinés à coopérer avec les boutons poussoirs d'adaptateur.

Dans la technique actuelle, il existe autant de variétés d'adaptateur que de variétés de pièces terminales ou d'extrémités de bras d'entrainement, ce qui n'est pas pratique ni économique. Il existe donc un réel besoin d'un adaptateur universel apte à être monté sur au moins deux, voire plus, pièces terminales de bras d'essuie-glace.

L'invention propose une solution simple, efficace et économique.

### EXPOSE DE L'INVENTION

L'invention propose à cet effet un organe entre un système de connexion d'un balai d'essuie-glace et un bras d'entraînement dudit balai, ledit organe présentant un corps de forme générale allongée le long d'un axe longitudinal et étant configuré pour être fixé sélectivement à une pièce terminale d'un premier ou d'un deuxième bras, et à une pièce terminale d'un troisième bras, différente de celle du premier ou du deuxième bras, ledit organe comportant au moins une première surface d'appui d'une partie de ladite pièce terminale dudit premier ou deuxième bras, ledit organe comportant également au moins un premier moyen de verrouillage, notamment un bouton poussoir, configuré pour coopérer avec ledit premier ou deuxième bras. L'organe comprend en outre au moins une seconde surface d'appui, sensiblement parallèle à ladite au moins une première surface d'appui et décalée selon l'axe longitudinal par rapport à ladite au moins une première surface d'appui, d'au moins une partie de ladite pièce terminale dudit troisième bras, ledit organe comprenant également au moins un second moyen de verrouillage, notamment un bouton poussoir, configuré pour coopérer avec ladite pièce terminale dudit troisième bras.

La présente invention propose ainsi un organe universel, du type adaptateur, pour au moins deux bras d'entraînement différents, par exemple à extrémités ou pièces terminales en U. Le premier bras peut être du type précité et comprendre une extrémité destinée à venir en appui sur la première face d'appui de l'organe, et au moins un orifice ou une encoche destiné à coopérer avec le premier bouton poussoir de l'organe. Le second bras comprend une pièce terminale, par exemple moins large que celle du premier bras et destinée à venir en appui sur la deuxième face d'appui décalée longitudinalement, et au moins un orifice ou une encoche destiné à coopérer avec le premier ou le deuxième bouton poussoir de l'organe.

L'organe selon l'invention peut comprendre une ou plusieurs des caractéristiques suivantes, prises isolément ou en combinaison les unes avec les autres :
- il comporte une tête définissant ladite première surface d'appui ;
- la tête est disposée à une extrémité longitudinale de l'organe ;
- le corps est relié à la tête par l'une de ses extrémités longitudinales ;
- la tête définit en outre au moins une partie d'un orifice d'engagement d'une partie de ladite pièce terminale dudit premier bras. Ainsi, l'organe universel selon l'invention peut en outre s'adapter à des bras présentant une languette apte à être positionnée dans un orifice d'engagement correspondant de l'adaptateur.
Avantageusement, on prévoit que ladite au moins une première surface et ladite au moins une seconde surface sont orientées sensiblement dans la même direction, et notamment qu'elles sont orientées vers une extrémité longitudinale du corps, opposée à celle reliée à ladite tête.

Selon l'invention, on prévoit que l'organe comporte un élément en saillie définissant au moins ladite seconde surface d'appui. II est prévu que :
- ledit corps comprend deux parois latérales sensiblement parallèles et à distance l'une de l'autre, ledit au moins un élément en saillie étant situé sur au moins une de ces parois latérales,
- au moins un élément en saillie est situé sur chacune desdites parois latérales,
- chaque élément en saillie est situé au voisinage de ladite tête,
- chaque élément en saillie est escamotable et est porté par une languette élastiquement déformable de la paroi latérale correspondante dudit corps,
- chaque paroi latérale est reliée, de préférence par une languette élastiquement déformable, à un troisième moyen de verrouillage, notamment un bouton poussoir, ces boutons poussoirs pouvant être reliés à des extrémités longitudinales desdites parois latérales, opposées à ladite tête,
- lesdites parois latérales sont reliées entre elles par une paroi transversale,
- la paroi transversale est reliée, de préférence par au moins une patte élastiquement déformable, à au moins un bouton poussoir,
- la paroi transversale est reliée à deux boutons poussoirs, qui sont sensiblement alignés l'un derrière l'autre le long d'un axe longitudinal de l'organe, et qui sont de préférence situés respectivement au voisinage des extrémités longitudinales de l'organe,
- la paroi transversale comprend au moins une partie dudit orifice d'engagement de ladite partie de ladite pièce terminale dudit premier bras,
- l'organe comporte des premiers moyens de liaison configurés pour coopérer avec ladite pièce terminale ou extrémité de chaque bras et des seconds moyens de liaison configurés pour coopérer avec ledit balai,
- ledit corps comprend des moyens de fixation par encliquetage élastique, configurés pour coopérer avec ladite pièce terminale ou extrémité de chaque bras,
- le ou chaque bouton poussoir est situé dans une lumière ou fente de l'organe.

La présente invention concerne également un ensemble comportant un organe tel que décrit précédemment et au moins deux bras d'entraînement, pour un essuie-glace, en particulier de véhicule automobile, chacun desdits bras comprenant une pièce terminale ayant en section transversale une forme sensiblement en U et comportant deux jambes latérales définissant une dimension latérale de la pièce terminale, un premier des bras comportant une pièce terminale de dimension latérale L1 et un second des bras comportant une pièce terminale de dimension latérale L2, inférieure à L1, dans lequel l'adaptateur peut être monté indifféremment sur l'une ou l'autre des pièces terminales, la pièce terminale du premier des bras étant destinée à venir en appui sur la première surface d'appui de l'organe et la pièce terminale du second des bras étant destinée à venir en appui sur la deuxième surface d'appui en saillie de l'organe. La pièce terminale du second bras peut alors, dans cette position de montage, être espacée de la première surface d'appui.

La présente invention concerne également un balai ou un bras d'essuie-glace, caractérisé en ce qu'il comprend ou porte un organe tel que décrit ci-dessus.

### DESCRIPTION DES FIGURES

L'invention sera mieux comprise et d'autres détails, caractéristiques et avantages de l'invention apparaîtront à la lecture de la description suivante faite à titre d'exemple non limitatif en référence aux dessins annexés, dans lesquels :
- la figure 1 est une vue schématique en perspective d'un essuie-glace, cet essuie-glace comportant un balai d'essuie-glace, un bras d'entraînement du balai, et un système de connexion du balai au bras,
- les figures 2 et 3 sont des vues schématiques en perspective d'un organe selon l'invention pour un système de connexion d'un balai d'essuie-glace à trois bras d'entraînement, de manière sélective, et
- les figures 4 à 6 sont des vues schématiques en perspective de l'organe des figures 2 et 3 monté sur la pièce terminale de chacun desdits bras d'entraînement précités.

### DESCRIPTION DETAILLEE

Il faut noter que les figures exposent l'invention de manière détaillée pour mettre en oeuvre l'invention, lesdites figures pouvant bien entendu servir à mieux définir l'invention le cas échéant.

Dans la description qui suit, les dénominations longitudinales ou latérales se réfèrent à l'orientation du balai d'essuie-glace ou du bras d'entraînement selon l'invention. La direction longitudinale correspond à l'axe principal du balai ou du bras dans lequel il s'étend, alors que les orientations latérales correspondent à des droites concourantes, c'est-à-dire qui croisent la direction longitudinale, notamment perpendiculaires à l'axe longitudinal du balai ou du bras dans son plan de rotation. Pour les directions longitudinales, les dénominations extérieure (ou avant) ou intérieure (ou arrière) s'apprécient par rapport au point de fixation du balai sur le bras, la dénomination intérieure correspondant à la partie où le bras et un demi-balai s'étendent, ou par rapport au point de fixation du bras au véhicule. Enfin, les directions référencées comme supérieures ou inférieures correspondent à des orientations perpendiculaires au plan de rotation du balai d'essuie-glace, la dénomination inférieure contenant le plan du pare-brise.

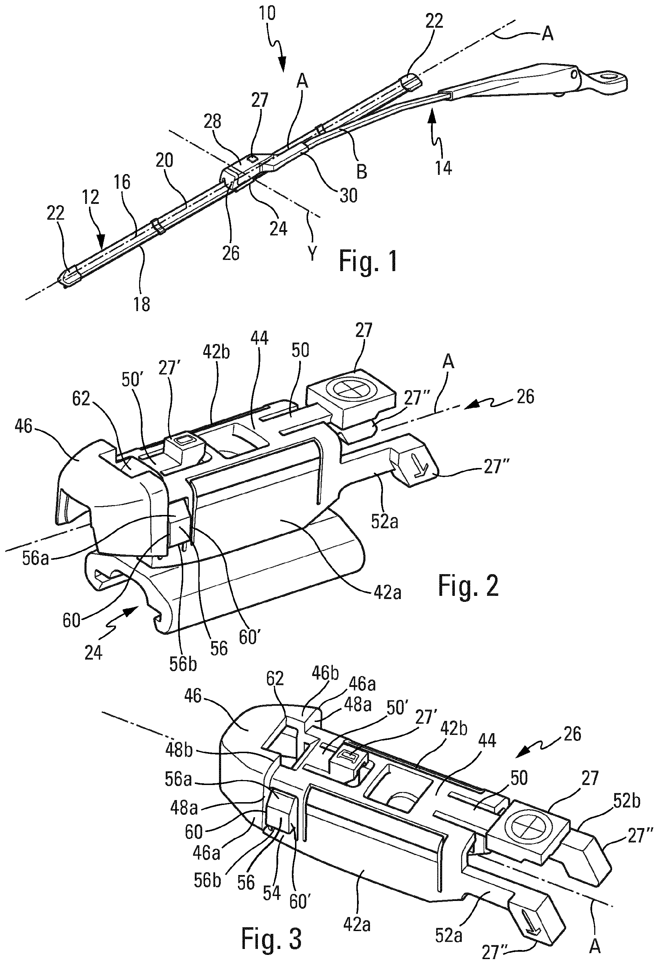

Il est illustré à la figure 1 un essuie-glace 10 comportant notamment un balai 12 et un bras 14 d'entraînement du balai 12.

Le balai 12 est de préférence du type flat blade et comprend un corps longitudinal 16, une lame d'essuyage 18, en général en caoutchouc, et au moins une vertèbre (non visible) qui rigidifie la lame et favorise son application sur un pare-brise de véhicule.

Le corps 16 du balai 12 peut comporter un déflecteur aérodynamique supérieur 20 destiné à améliorer le fonctionnement du système d'essuyage, le but de ce déflecteur étant d'améliorer le plaquage du balai sur le pare-brise et donc la performance aérodynamique de l'essuie-glace.

Le balai 12 peut comprendre en outre des embouts d'extrémité 22 ou agrafes d'accrochage de la lame 18 et de la vertèbre sur le corps 16, ces embouts 22 étant situés à chacune des extrémités longitudinales du corps 16.

Le balai 12 comprend sensiblement en son milieu un connecteur 24 intermédiaire. Un adaptateur 26 solidaire du bras 14 est monté sur le connecteur 24 de façon à garder un degré de liberté en pivotement autour d'un axe d'articulation Y qui est un axe transversal sensiblement perpendiculaire à l'axe longitudinal A du balai 12. Ce degré de liberté autorise un pivotement du balai 12 vis-à-vis du bras 14 et permet ainsi au balai de suivre la courbure du pare-brise lors de ses déplacements. L'adaptateur 26 peut être désolidarisé du bras 14 par appui sur un moyen de verrouillage, ici un bouton poussoir 27, porté par l'adaptateur.

Le bras 14 est destiné à être entraîné par un moteur pour suivre un mouvement angulaire de va-et-vient permettant d'évacuer l'eau et éventuellement d'autres éléments indésirables recouvrant le pare-brise. L'adaptateur 26 assure la liaison du balai 12 au bras 14 et en particulier à une tête ou pièce terminale 28 du bras qui peut être formée d'une seule pièce avec le bras ou rapportée et fixée sur celui-ci.

Dans l'exemple représenté, la pièce terminale 28 du bras forme une chape à section transversale sensiblement en U.

La pièce terminale 28 a une forme allongée dont l'axe longitudinal d'allongement A est en général sensiblement parallèle à l'axe d'allongement ou longitudinal du balai 12. La pièce terminale 28 comprend une partie 30 de liaison au reste du bras 14, par exemple par sertissage. Cette partie 30 a une forme générale allongée et s'étend le long d'un axe B sensiblement parallèle à l'axe A et à distance de cet axe, comme cela est visible sur la figure 1. La partie 30 est reliée à une extrémité arrière ou intérieure du reste de la pièce terminale 28.

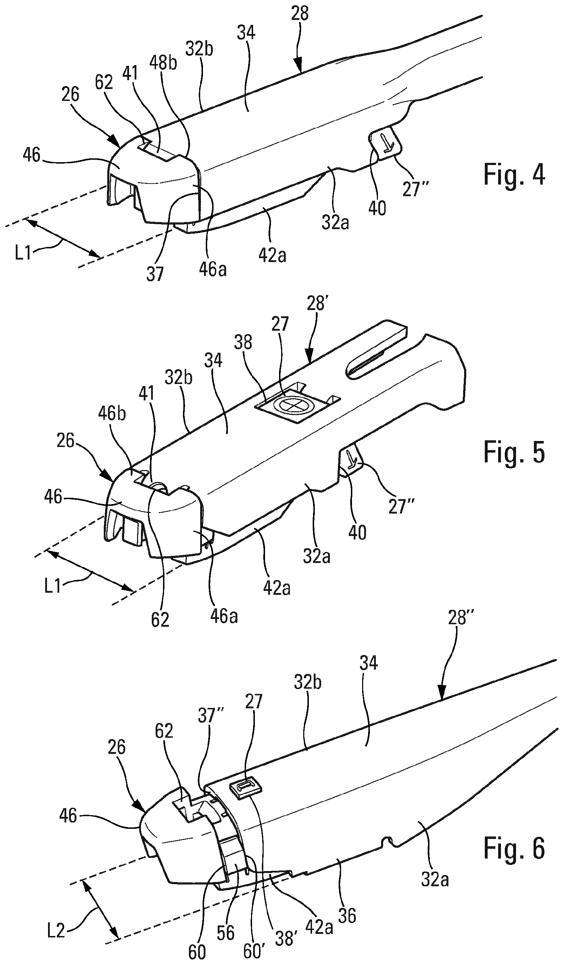

En référence aux figures 4 à 6 qui représentent respectivement trois pièces terminales ou extrémités 28, 28', 28" de bras d'entraînement 14, 14', 14", chaque pièce terminale comprend deux jambes latérales 32a, 32b dont les bords longitudinaux supérieurs sont reliés entre eux par une paroi transversale supérieure 34. Les jambes 32a, 32b et la paroi 34 délimitent entre elles un espace de logement de l'adaptateur 26. Les jambes 32a, 32b peuvent comprendre au niveau de leurs bords longitudinaux inférieurs des moyens 36, tels que des crochets, de retenue de l'adaptateur 26 dans l'espace précité. L'extrémité libre 37 des pièces terminales 28, 28', 28" est définie par les bords d'extrémité longitudinale des jambes 32a, 32b et de la paroi supérieure 34.

La paroi supérieure 34 peut comprendre une ouverture 38, 38' traversante de forme complémentaire d'un moyen de verrouillage, notamment de type bouton poussoir, supérieur 27, 27' porté par l'adaptateur. En position de montage, le bouton poussoir 27 est logé dans cette ouverture 38 et peut traverser cette dernière de façon à s'étendre en saillie de la face supérieure de la paroi 34. Le montage du bouton poussoir 27 dans l'ouverture 38 se fait par simple engagement ou emboîtement, de préférence par encliquetage élastique.

Les parois latérales 32a, 32b peuvent comprendre chacune une encoche 40 de forme complémentaire d'un troisième moyen de verrouillage, notamment de type bouton poussoir, latéral 27". En position de montage, les boutons poussoirs latéraux 27" sont logés dans ces encoches 40 et peuvent les traverser de façon à être en saillie sur les faces externes des parois 32a, 32b. Le montage des boutons poussoirs 27" dans les encoches 40 se fait par simple engagement ou emboîtement, de préférence par encliquetage élastique.

On définit la largeur comme la dimension latérale de la pièce terminale 28, 28', 28", mesurée dans une direction sensiblement perpendiculaire à l'axe A et parallèle à la paroi 34. De plus, on définit par E, l'épaisseur de chaque jambe 32a, 32b, ce qui revient à l'épaisseur de la tôle utilisée pour fabriquer la pièce terminale lorsque celle-ci est obtenue par emboutissage.

La largeur externe d'une pièce terminale est mesurée entre les faces externes des jambes 32a, 32b et la largeur interne est mesurée entre les faces internes des jambes 32a, 32b.

Les pièces terminales 28, 28', 28" sont différentes. Elles ont globalement la même forme mais diffèrent les unes des autres notamment par des dimensions et par la position de leurs ouvertures 38, 38' ou encoches 40. Ainsi, les première et deuxième pièces terminales 28, 28' ont une largeur interne L1, et la troisième pièce terminale 28" a une largeur interne L2 qui est inférieure à la largeur interne L1.

Par ailleurs, l'ouverture 38' de la troisième pièce terminale 28" est située au voisinage de son extrémité libre 37" ou extrémité extérieure, alors que l'ouverture 38 de la deuxième pièce terminale 28' est plus éloignée de son extrémité libre correspondante 37'. De plus, l'ouverture 38' de la troisième pièce terminale 28" a une section plus petite que celle de l'ouverture 38 de la deuxième pièce terminale 28'. La troisième pièce terminale 28" est dépourvue d'encoches 40 du type précité alors que les première et deuxième pièces terminales 28, 28' comprennent de telles encoches 40. La pièce terminale 28 est dépourvue d'ouverture 38. Enfin, les parois supérieures 34 des pièces terminales 28, 28' se prolongent vers l'extérieur pour former chacune une patte 41 à section longitudinale sensiblement en S, qui est configurée pour être engagée dans un orifice de l'adaptateur 26 selon l'invention.

L'adaptateur 26 selon l'invention est du type « universel » et est destiné à être monté indifféremment sur l'une ou l'autre des pièces terminales 28, 28', 28".

L'adaptateur 26, mieux visible aux figures 2 et 3, a une forme générale allongée le long de l'axe longitudinal A. Il comprend un corps comportant deux parois latérales 42a, 42b sensiblement parallèles entre elles et à l'axe longitudinal A, et à distance l'une de l'autre. Ces parois 42a, 42b sont reliées entre elles à leurs extrémités supérieures par une paroi transversale supérieure 44 sensiblement perpendiculaire aux parois 42a, 42b. Les parois 42a, 42b, 44 ont ici une forme allongée en direction longitudinale.

Les parois 42a, 42b, 44 de l'adaptateur 26 définissent entre elles un espace longitudinal dans lequel est destinée à être montée une partie du connecteur 24. Le connecteur 24 porte ici des moyens femelles (non visibles) destinés à être emboîtés par encliquetage élastique dans des moyens mâles de forme complémentaire disposés en saillie des parois 42a, 42b du corps de l'adaptateur 26.

Le corps de l'adaptateur 26 est relié à une première de ses extrémités longitudinales à un carénage ou capotage, aussi appelé casquette ou tête 46. Cette tête 46 a une dimension latérale supérieure à celle du corps de l'adaptateur et une hauteur également supérieure à celle du corps. Les parois latérales 42a, 42b du corps de l'adaptateur sont ainsi en retrait ou décalées transversalement, c'est-à-dire selon la direction de l'axe transversal de pivotement, par rapport à des faces latérales (externes) 46a de la tête, et la paroi supérieure 44 du corps de l'adaptateur est en retrait ou décalée verticalement, c'est-à-dire selon une direction perpendiculaire à l'axe d'allongement A et à l'axe transversal de pivotement, par rapport à une face supérieure (externe) 46b de la tête.

Les faces latérales 46a de la tête 46 sont reliées aux parois latérales 42a, 42b du corps par des faces arrière latérales 48a, respectivement, qui s'étendent sensiblement perpendiculairement à l'axe longitudinal A de l'adaptateur. La face supérieure 46c de la tête 46 est reliée à la paroi supérieure 44 du corps par une face arrière supérieure 48b qui s'étend également sensiblement perpendiculairement à l'axe longitudinal A.

Les faces arrière latérales 48a et supérieure 48b de la tête 46 forment une surface d'appui continue de l'extrémité libre 37 des première ou deuxième pièces terminales 28, 28', comme on le voit aux figures 4 et 5. Plus précisément, en position montée de l'adaptateur dans la première ou deuxième pièce terminale 28 ou 28', les bords libres avant des jambes latérales 32a, 32b de la pièce terminale sont destinés à venir en appui sur les faces arrière latérales 48a, et le bord libre avant de la paroi transversale 34 de la pièce terminale est destiné à venir en appui sur la face 48b.

La paroi supérieure 44 du corps de l'adaptateur 26 comprend des fentes longitudinales parallèles entre elles et à l'axe longitudinal A et espacées les unes des autres, de façon à définir entre elles des languettes longitudinales 50, 50'. Chaque languette 50a, 50b est élastiquement déformable et est reliée à son extrémité libre arrière à un bouton poussoir supérieur 27, 27'. A l'état libre sans contrainte, chaque languette 50 est telle que le bouton poussoir 27, 27' est en saillie au-dessus de la paroi supérieure 44, c'est-à-dire vers l'extérieur de l'adaptateur. Les déformations élastiques des languettes ont ici lieu dans un plan longitudinal médian sensiblement vertical, c'est-à-dire sensiblement perpendiculaire à la paroi supérieure 44.

L'adaptateur 26 est ainsi équipé de deux boutons poussoirs supérieurs 27, 27' indépendants. Les boutons 27, 27' sont sensiblement disposés côte à côte, l'un derrière l'autre, le long de l'axe longitudinal A. Une première languette 50, ici extérieure, porte à son extrémité libre un premier 27 bouton poussoir, sensiblement à l'extrémité longitudinale de l'adaptateur opposée à la tête 46, et une deuxième languette 50', ici intérieure, porte à son extrémité libre un second 27' bouton poussoir, sensiblement au voisinage de la tête de l'adaptateur.

La première languette 50 a une longueur grande relativement à la longueur de la seconde languette 50'. De plus, le premier bouton poussoir 27 définit une surface supérieure qui est plus importante que la surface supérieure du second bouton poussoir 27'.

Les deux boutons poussoirs 27, 27' portés par l'adaptateur sont avantageusement agencés de sorte que leurs faces d'appui soient sensiblement alignées et centrées. Par ailleurs les faces d'appui peuvent être disposées sensiblement à la même hauteur, c'est-à-dire à la même distance de la paroi supérieure de l'adaptateur, ou bien au contraire être décalées verticalement l'une par rapport à l'autre.

A l'état libre sans contrainte, chaque languette 50, 50' est telle que le bouton poussoir 27, 27' qu'elle porte est en saillie sur la paroi supérieure 44. Lors du montage de l'adaptateur 26 dans l'une ou l'autre des première ou deuxième pièce terminale 28, 28', un seul des boutons poussoirs est destiné à s'engager par encliquetage élastique dans l'ouverture 38 ou 38' correspondante de la pièce terminale, l'autre des boutons poussoirs étant alors destiné à prendre appui sur la face inférieure de la paroi transversale de la pièce terminale et à être rabattue vers le bas par déformation élastique.

Les parois latérales 42a, 42b du corps se prolongent longitudinalement vers l'arrière, à l'opposé de la tête, par des pattes longitudinales 52a, 52b élastiquement déformables. Chaque paroi 42a, 42b est reliée à une patte 52a, 52b, ces pattes 52a, 52b étant sensiblement parallèles et symétriques par rapport à un plan longitudinal médian, sensiblement vertical, c'est-à-dire perpendiculaire à la paroi supérieure 44 de l'adaptateur. Les extrémités libres des pattes 52a, 52b, qui sont situées du côté opposé à la tête, sont reliées aux boutons poussoirs latéraux 27". Chaque patte 52a, 52b porte ainsi un troisième bouton poussoir latéral 27". Les déformations élastiques des pattes 52a, 52b ont ici lieu dans un plan longitudinal sensiblement horizontal, c'est-à-dire sensiblement parallèle à la paroi supérieure 44. Les pattes 52a, 52b peuvent être rapprochées l'une de l'autre par déformation élastique. Les boutons poussoirs latéraux 27" sont conformés pour coopérer avec les encoches 40 des première ou deuxième pièces terminales 28, 28', de manière sélective.

Les parois latérales 42a, 42b du corps de l'adaptateur 26 comprennent des fentes sensiblement parallèles entre elles et perpendiculaires à l'axe longitudinal A et espacées les unes des autres, de façon à définir entre elles des languettes 54 sensiblement verticales. Chaque languette 54 est élastiquement déformable et est reliée à son extrémité libre, ici supérieure, à un élément 56 en saillie tel qu'un godron. A l'état libre sans contrainte, chaque languette 54 est telle que l'élément 56 est en saillie sur la paroi 42a, 42b correspondante. Les déformations élastiques des languettes ont ici lieu dans un plan transversal sensiblement vertical, c'est-à-dire sensiblement perpendiculaire à la paroi supérieure 44.

L'adaptateur 26 est ainsi équipé de deux éléments latéraux 56 en saillie indépendants. Les éléments 56 sont disposés sur les côtés de l'adaptateur 26 et sont ici situés au voisinage immédiat de la tête 46.

Chaque élément 56 comporte une face latérale supérieure 56a et une face latérale inférieure 56b. Les faces latérales supérieures 56a des éléments 56 convergent l'une vers l'autre vers le haut, et leurs faces latérales inférieures 56b sont sensiblement parallèles.

Par ailleurs, chaque élément 56 comporte une face extérieure 60 et une face intérieure 60', sensiblement parallèles entre elles et perpendiculaires à l'axe longitudinal A. Les faces extérieures 60 des éléments 56 sont coplanaires et sont disposées en regard des faces d'appui latérales 48a de la tête 46, en étant séparées les unes des autres par les fentes précitées des parois latérales 42a, 42b. Les faces intérieures 60' des éléments 56 sont coplanaires et forment la seconde surface d'appui de l'extrémité libre 37" de la troisième pièce terminale 28", comme on le voit en figure 6. Plus précisément, en position montée de l'adaptateur dans la troisième pièce terminale 28", les bords libres avant des jambes latérales 32a, 32b de la troisième pièce terminale 28" sont destinés à venir en appui sur les faces intérieures 60' des éléments en saillie 56. La face intérieure 60' de chacun des éléments 56 peut avoir une dimension transversale ou largeur proche de l'épaisseur E d'une jambe de la troisième pièce terminale 28".

Les faces latérales inférieures 56b des éléments 56 sont sensiblement parallèles aux faces latérales (externes) 46a de la tête 46 et sont en retrait ou décalée par rapport à celle-ci.

Les faces latérales inférieures 56b des éléments 56 sont espacées l'une de l'autre d'une distance transversale sensiblement égale à la largeur externe L2 de la pièce transversale 28". Ainsi, ces faces 56b sont alignées avec les faces externes des jambes 32a, 32b de la troisième pièce terminale 28", comme cela est visible en figure 6. Par ailleurs, les faces externes des parois latérales 42a, 42b du corps de l'adaptateur peuvent être espacées l'une de l'autre d'une distance transversale sensiblement égale à la largeur interne de la troisième pièce terminale 28". Ainsi, la troisième pièce terminale 28" est calée en direction transversale par coopération de ses jambes avec les parois latérales du corps de l'adaptateur.

Comme indiqué plus haut, les première et deuxième pièces terminales 28, 28' ont une largeur plus grande que celle de la troisième pièce terminale 28". En position montée sur l'adaptateur 26, les jambes de ces première ou deuxième pièces terminales sont en appui sur les éléments 56 et les sollicitent transversalement l'un vers l'autre. C'est la coopération des éléments 56 avec la première ou la deuxième pièce terminale 28, 28' qui permet de la caler en direction transversale.

Dans l'exemple représenté, l'adaptateur 26 comprend en outre un orifice supérieur 62 d'engagement des pattes 41 des première ou deuxième pièces terminales 28, 28' (figures 4 et 5). Cet orifice 62 est ici formé en partie dans la tête 46, à l'extrémité arrière de celle-ci, et en partie dans la paroi supérieure 44, à l'extrémité avant de celle-ci. L'orifice 62 a une forme générale carrée ou rectangulaire.

On va maintenant décrire le montage de l'adaptateur 26 selon l'invention sur chacune des pièces terminales 28, 28', 28".

En référence à la figure 4, l'adaptateur 26 est engagé dans la première pièce terminale 28 en inclinant tout d'abord l'axe de l'adaptateur vis-à-vis de celui A de la première pièce terminale 28 puis en engageant la patte 41 de la pièce terminale dans l'orifice 62 de l'adaptateur. Lors de cet engagement, les jambes de la première pièce terminale commencent par glisser sur les faces supérieures 56a des éléments 56 puis sur les faces inférieures 56b, ce qui entraîne les éléments 56 à se rapprocher l'un de l'autre. De plus, le bord d'extrémité avant de la paroi supérieure de la première pièce terminale vient en appui sur la face 48b de la tête 46 de l'adaptateur. L'extrémité arrière de l'adaptateur est ensuite rapprochée de la première pièce terminale jusqu'à ce que les boutons poussoirs latéraux 27" s'engagent par encliquetage élastique dans les encoches 40 de la première pièce terminale 28. Les bords d'extrémité avant des jambes latérales 32a, 32b de la première pièce terminale viennent en appui sur les faces d'appui latérales 48a de la tête 46 formant la première surface d'appui de l'adaptateur. Les axes d'allongement de l'adaptateur et de la première pièce terminale 28 sont alors sensiblement parallèles.

En référence à la figure 5, l'adaptateur 26 est engagé dans la deuxième pièce terminale 28' en inclinant tout d'abord l'axe d'allongement de l'adaptateur vis-à-vis de celui de la deuxième pièce terminale 28' puis en engageant la patte 41 de la deuxième pièce terminale dans l'orifice 62 de l'adaptateur. Lors de cet engagement, les jambes de la deuxième pièce terminale commencent par glisser sur les faces supérieures 56a des éléments 56 puis sur les faces inférieures 56b, ce qui entraîne les éléments en saillie 56 à se rapprocher l'un de l'autre. De plus, le bord d'extrémité avant de la paroi supérieure de la deuxième pièce terminale vient en appui sur la face d'appui supérieure 48b de la tête 46 formant partie de la première surface d'appui. L'extrémité arrière de l'adaptateur est ensuite rapprochée de la deuxième pièce terminale jusqu'à ce que les boutons poussoirs latéraux 27" s'engagent par encliquetage élastique dans les encoches 40 de la deuxième pièce terminale 28', et que le premier bouton poussoir supérieure 27 s'engage par encliquetage élastique dans l'ouverture 38 de la deuxième pièce terminale 28'. Les bords d'extrémité avant des jambes latérales 32a, 32b de la deuxième pièce terminale viennent en appui sur les faces d'appui latérales 48a de la tête 46 formant partie de la première surface d'appui. Les axes d'allongement de l'adaptateur et de la deuxième pièce terminale 28' sont alors sensiblement parallèles.

Enfin, en référence à la figure 6, l'adaptateur 26 est engagé dans la troisième pièce terminale 28" en inclinant tout d'abord l'axe de l'adaptateur vis-à-vis de celui A de la troisième pièce terminale 28" puis en engageant le corps de l'adaptateur entre les jambes de la troisième pièce terminale. Lors de cet engagement, les jambes de la troisième pièce terminale coopèrent par glissement avec les parois latérales 32a, 32b du corps et viennent en appui sur les faces intérieures 60' des éléments 56 formant la deuxième surface d'appui de l'adaptateur. L'extrémité arrière de l'adaptateur est ensuite rapprochée de la troisième pièce terminale jusqu'à ce que le second bouton poussoir supérieur 27' s'engage par encliquetage élastique dans l'ouverture 38' de la troisième pièce terminale 28". Les axes de l'adaptateur et de la troisième pièce terminale 28" sont alors sensiblement parallèles. Comme on le voit en figure 6, l'extrémité libre 37" de la troisième pièce terminale 28" est en appui sur la deuxième surface d'appui, portée ici par les éléments en saillie 56, et cette extrémité libre est espacée de la tête 46 d'une distance correspondant à la largeur ou dimension longitudinale (le long de l'axe A) des éléments 56. L'extrémité libre de la troisième pièce terminale 28" n'est ainsi pas en appui sur la première surface d'appui portée ici par la tête 46 de l'adaptateur 26.

## Revendications

1. Organe (26) pour un système de connexion entre un balai (12) d'essuie-glace (10) et un bras (14) d'entraînement dudit balai, ledit organe, présentant un corps de forme générale allongée le long d'un axe longitudinal (A), étant configuré pour être fixé sélectivement à une pièce terminale (28, 28') d'au moins un premier ou d'un deuxième bras, et à une pièce terminale (28") d'un troisième bras, ledit organe comportant au moins une première surface (48a, 48b) d'appui d'une partie de la pièce terminale dudit au moins premier ou deuxième bras, ledit organe comportant également au moins un premier moyen de verrouillage (27) configuré pour coopérer avec ladite pièce terminale (28, 28') dudit premier ou deuxième bras, ledit organe (26) comprenant en outre au moins une seconde surface d'appui (60'), sensiblement parallèle à ladite au moins une première surface d'appui et décalée selon l'axe longitudinal (A) par rapport à ladite au moins une première surface d'appui, d'au moins une partie de la pièce terminale (28") dudit troisième bras, ledit organe comprenant également au moins un second moyen de verrouillage (27') configuré pour coopérer avec ladite pièce terminale (28") dudit troisième bras, ledit organe (26) comportant un élément en saillie (56) définissant au moins ladite seconde surface d'appui (60'), ledit corps comprenant deux parois latérales (42a, 42b) sensiblement parallèles et à distance l'une de l'autre, ledit au moins un élément en saillie (56) étant situé sur au moins une de ces parois latérales, au moins un élément en saillie (56) étant situé sur chacune desdites parois latérales (42a, 42b), l'organe (26) étant **caractérisé en ce que** chaque élément en saillie (56) est escamotable et est porté par une languette (54) élastiquement déformable de la paroi latérale (42a, 42b) correspondante dudit corps.

2. Organe (26) selon la revendication 1, **caractérisé en ce qu'**il comporte une tête (46) définissant ladite première surface d'appui (48a, 48b).

3. Organe (26) selon la revendication 2, **caractérisé en ce que** ladite tête (46) est disposée à une extrémité longitudinale de l'organe (26).

4. Organe (26) selon la revendication 3, **caractérisé en ce que** ledit corps est relié à ladite tête (46) par l'une de ses extrémités longitudinales.

5. Organe (26) selon l'une des revendications précédentes, dans lequel ladite au moins une première surface (48a, 48b) et ladite au moins une seconde surface (60') sont orientées sensiblement dans la même direction.

6. Organe (26) selon la revendication précédente, en dépendance d'au moins la revendication 2, dans lequel ladite au moins une première surface (48a, 48b) et ladite au moins une seconde surface (60') sont orientées vers une extrémité longitudinale du corps, opposée à celle reliée à ladite tête (46).

7. Organe (26) selon l'une quelconque des revendications précédentes, en combinaison avec au moins la revendication 2, dans lequel chaque élément en saillie (56) est situé au voisinage de ladite tête (46).

8. Organe (26) selon l'une des revendications précédentes, dans lequel chaque paroi latérale (42a, 42b) est reliée, de préférence par une patte (52a, 52b) élastiquement déformable, à un troisième moyen de verrouillage (27").

9. Organe (26) selon la revendication précédente, en dépendance d'au moins la revendication 2, dans lequel les troisièmes moyens de verrouillage (27") sont reliés à des extrémités longitudinales desdites parois latérales (42a, 42b), opposées à ladite tête (46).

10. Organe (26) selon l'une des revendications précédentes, dans lequel lesdites parois latérales (42a, 42b) sont reliées entre elles par une paroi transversale (44).

11. Organe (26) selon la revendication précédente, dans lequel la paroi transversale (44) est reliée, de préférence par au moins une languette (50, 50') élastiquement déformable, à au moins le premier ou le deuxième moyens de verrouillage (27, 27').

12. Organe (26) selon la revendication précédente, dans lequel la paroi transversale (44) est reliée au premier et au deuxième moyens de verrouillage (27, 27').

13. Organe (26) selon la revendication précédente, dans lequel les deux moyens de verrouillage (27, 27') sont sensiblement alignés l'un derrière l'autre le long de l'axe longitudinal (A) de l'organe.

14. Organe (26) selon la revendication 12 ou 13, dans lequel les deux moyens de verrouillage (27, 27') sont agencés de sorte que le premier moyen de verrouillage est situé au voisinage d'une extrémité longitudinale de l'organe et que le deuxième moyen de verrouillage est situé au voisinage de l'extrémité longitudinale opposée de l'organe.

15. Organe (26) selon l'une des revendications précédentes, **caractérisé en ce qu'**il comprend un orifice (62) d'engagement d'une partie de ladite pièce terminale (28, 28') dudit premier ou deuxième bras.

16. Organe (26) selon la revendication précédente, en combinaison avec au moins la revendication 2, dans lequel la tête (46) porte une partie dudit orifice d'engagement (62).

17. Organe (26) selon l'une des revendications 15 ou 16, en combinaison avec au moins la revendication 10, dans lequel la paroi transversale (44) comprend au moins une partie dudit orifice (62) d'engagement.

18. Organe (26) selon l'une des revendications précédentes, dans lequel au moins un parmi le premier moyen de verrouillage, le second moyen de verrouillage et le troisième moyen de verrouillage est un bouton poussoir.

19. Balai (12) ou bras (14) d'essuie-glace (10), **caractérisé en ce qu'**il comprend ou porte un organe (26) selon l'une des revendications précédentes.

## Patentansprüche

1. Organ (26) für ein System zur Verbindung zwischen einem Wischerblatt (12) eines Scheibenwischers (10) und einem Antriebsarm (14) dieses Wischerblatts, wobei das Organ, das einen Körper von entlang einer Längsachse (A) lang gestreckter allgemeiner Form aufweist, dafür ausgebildet ist, selektiv an einem Endstück (28, 28') wenigstens eines ersten oder eines zweiten Armes und an einem Endstück (28") eines dritten Armes befestigt zu werden, wobei das Organ wenigstens eine erste Anlagefläche (48a, 48b) für einen Abschnitt des Endstücks des wenigstens einen ersten oder zweiten Armes aufweist, wobei das Organ außerdem wenigstens ein erstes Verriegelungsmittel (27) aufweist, das dafür ausgebildet ist, mit dem Endstück (28, 28') des ersten oder zweiten Armes zusammenzuwirken, wobei das Organ (26) außerdem wenigstens eine zweite Anlagefläche (60'), die im Wesentlichen zu der wenigstens einen ersten Anlagefläche parallel ist und entlang der Längsachse (A) bezüglich dieser wenigstens einen ersten Anlagefläche verschoben ist, für wenigstens einen Abschnitt des Endstücks (28") des dritten Armes umfasst, wobei das Organ außerdem wenigstens ein zweites Verriegelungsmittel (27') aufweist, das dafür ausgebildet ist, mit dem Endstück (28") des dritten Armes zusammenzuwirken, wobei das Organ (26) ein vorstehendes Element (56) aufweist, das wenigstens die zweite Anlagefläche (60') definiert, wobei der Körper zwei im Wesentlichen parallele und voneinander beabstandete Seitenwände (42a, 42b) umfasst, wobei sich das wenigstens eine vorstehende Element (56) auf wenigstens einer dieser Seitenwände befindet, wobei sich wenigstens ein vorstehendes Element (56) auf jeder der Seitenwände (42a, 42b) befindet, wobei das Organ (26) **dadurch gekennzeichnet ist, dass** jedes vorstehende Element (56) versenkbar ist und von einer elastisch verformbaren Zunge (54) der entsprechenden Seitenwand (42a, 42b) des Körpers getragen wird.

2. Organ (26) nach Anspruch 1, **dadurch gekennzeichnet, dass** es ein Kopfstück (46) aufweist, das die erste Anlagefläche (48a, 48b) definiert.

3. Organ (26) nach Anspruch 2, **dadurch gekennzeichnet, dass** das Kopfstück (46) an einem Längsende des Organs (26) angeordnet ist.

4. Organ (26) nach Anspruch 3, **dadurch gekennzeichnet, dass** der Körper mit dem Kopfstück (46) durch eines seiner Längsenden verbunden ist.

5. Organ (26) nach einem der vorhergehenden Ansprüche, wobei die wenigstens eine erste Fläche (48a, 48b) und die wenigstens eine zweite Fläche (60') im Wesentlichen in derselben Richtung ausgerichtet ist.

6. Organ (26) nach dem vorhergehenden Anspruch in Abhängigkeit von wenigstens Anspruch 2, wobei wenigstens eine erste Fläche (48a, 48b) und die wenigstens eine zweite Fläche (60') zu einem Längsende des Körpers hin ausgerichtet sind, das zu demjenigen, das mit dem Kopfstück (46) verbunden ist, entgegengesetzt ist.

7. Organ (26) nach einem der vorhergehenden Ansprüche in Kombination mit wenigstens Anspruch 2, wobei sich jedes vorstehende Element (56) in der Nähe des Kopfstücks (46) befindet.

8. Organ (26) nach einem der vorhergehenden Ansprüche, wobei jede Seitenwand (42a, 42b), vorzugsweise durch eine elastisch verformbare Lasche (52a, 52b), mit einem dritten Verriegelungsmittel (27") verbunden ist.

9. Organ (26) nach dem vorhergehenden Anspruch in Abhängigkeit von wenigstens Anspruch 2, wobei die dritten Verriegelungsmittel (27") mit Längsenden der Seitenwände (42a, 42b) verbunden sind, die dem Kopfstück (46) gegenüberliegen.

10. Organ (26) nach einem der vorhergehenden Ansprüche, wobei die Seitenwände (42a, 42b) durch eine Querwand (44) miteinander verbunden sind.

11. Organ (26) nach dem vorhergehenden Anspruch, wobei die Querwand (44), vorzugsweise durch wenigstens eine elastisch verformbare Zunge (50, 50'), mit wenigstens dem ersten oder dem zweiten Verriegelungsmittel (27, 27') verbunden ist.

12. Organ (26) nach dem vorhergehenden Anspruch, wobei die Querwand (44) mit dem ersten und mit dem zweiten Verriegelungsmittel (27, 27') verbunden ist.

13. Organ (26) nach dem vorhergehenden Anspruch, wobei die zwei Verriegelungsmittel (27, 27') im Wesentlichen hintereinander entlang der Längsachse (A) des Organs ausgerichtet sind.

14. Organ (26) nach Anspruch 12 oder 13, wobei die zwei Verriegelungsmittel (27, 27') derart angeordnet sind, dass sich das erste Verriegelungsmittel in der Nähe eines Längsendes des Organs befindet und dass sich das zweite Verriegelungsmittel in der Nähe des entgegengesetzten Längsendes des Organs befindet.

15. Organ (26) nach einem der vorhergehenden Ansprüche, **dadurch gekennzeichnet, dass** es eine Öffnung (62) für den Eingriff eines Abschnitts des Endstücks (28, 28') des ersten oder zweiten Armes umfasst.

16. Organ (26) nach dem vorhergehenden Anspruch in Kombination mit wenigstens Anspruch 2, wobei das Kopfstück (46) einen Teil der Eingriffsöffnung (62) trägt.

17. Organ (26) nach einem der Ansprüche 15 oder 16 in Kombination mit wenigstens Anspruch 10, wobei die Querwand (44) wenigstens einen Teil der Eingriffsöffnung (62) umfasst.

18. Organ (26) nach einem der vorhergehenden Ansprüche, wobei das erste Verriegelungsmittel, das zweite Verriegelungsmittel und das dritte Verriegelungsmittel eine Drucktaste ist.

19. Wischerblatt (12) oder Arm (14) eines Scheibenwischers (10), **dadurch gekennzeichnet, dass** es bzw. er ein Organ (26) nach einem der vorhergehenden Ansprüche umfasst oder trägt.

## Claims

1. Element (26) for a connection system between a windscreen (10) wiper brush (12) and a driving arm (14) of said brush, said element having a body of general shape extending along a longitudinal axis (A) and being configured to be fixed selectively to a terminal piece (28, 28') of at least a first or a second arm, and to a terminal piece (28") of a third arm, said element comprising at least one first bearing surface (48a, 48b) of a portion of the terminal piece of said at least first or second arm, said element also comprising at least one first locking means (27), configured to cooperate with said terminal piece (28, 28') of said first or second arm, said element (26) further comprising at least one second bearing surface (60'), essentially parallel to said at least one first bearing surface and staggered along the longitudinal axis (A) with respect to said at least one first bearing surface, for at least a portion of the terminal piece (28") of said third arm, said element likewise comprising at least one second locking means (27'), configured to cooperate with said terminal piece (28") of said third arm, said element (26) having a projecting element (56) defining at least said second bearing surface (60'), said body comprising two lateral walls (42a, 42b) which are essentially parallel and at a distance from each other, said at least one projecting element (56) being situated on at least one of these lateral walls, at least one projecting element (56) being situated on each of said lateral walls (42a, 42b), the element (26) being **characterized in that** each projecting element (56) is retractable and is carried by an elastically deformable tongue (54) of the corresponding lateral wall (42a, 42b) of said body.

2. Element (26) according to Claim 1, **characterized in that** it has a head (46) defining said first bearing surface (48a, 48b).

3. Element (26) according to Claim 2, **characterized in that** said head (46) is disposed at one longitudinal end of the element (26).

4. Element (26) according to Claim 3, **characterized in that** said body is connected to said head (46) by one of its longitudinal ends.

5. Element (26) according to one of the preceding claims, wherein said at least one first surface (48a, 48b) and said at least one second surface (60') are oriented essentially in the same direction.

6. Element (26) according to the previous claim, in dependence on at least Claim 2, wherein said at least one first surface (48a, 48b) and said at least one second surface (60') are oriented toward a longitudinal end of the body, opposite the one connected to said head (46).

7. Element (26) according to any of the preceding claims, in combination with at least Claim 2, wherein each projecting element (56) is situated in the vicinity of said head (46).

8. Element (26) according to one of the preceding claims, wherein each lateral wall (42a, 42b) is connected, preferably by an elastically deformable tab (52a, 52b), to a third locking means (27").

9. Element (26) according to the previous claim, in dependence on at least Claim 2, wherein the third locking means (27") are connected to longitudinal ends of said lateral walls (42a, 42b), opposite said head (46).

10. Element (26) according to one of the preceding claims, wherein said lateral walls (42a, 42b) are joined together by a transverse wall (44).

11. Element (26) according to the previous claim, wherein the transverse wall (44) is connected, preferably by at least one elastically deformable tongue (50, 50'), to at least the first or the second locking means (27, 27').

12. Element (26) according to the previous claim, wherein the transverse wall (44) is connected to the first and to the second locking means (27, 27').

13. Element (26) according to the previous claim, wherein the two locking means (27, 27') are essentially aligned one behind the other along the longitudinal axis (A) of the element.

14. Element (26) according to Claim 12 or 13, wherein the two locking means (27, 27') are arranged such that the first locking means is situated in the vicinity of one longitudinal end of the element and the second locking means is situated in the vicinity of the opposite longitudinal end of the element.

15. Element (26) according to one of the preceding claims, **characterized in that** it comprises an engagement orifice (62) of a portion of said terminal piece (28, 28') of said first or second arm.

16. Element (26) according to the previous claim, in combination with at least Claim 2, wherein the head (46) carries a portion of said engagement orifice (62).

17. Element (26) according to one of Claims 15 or 16, in combination with at least Claim 10, wherein the transverse wall (44) comprises at least a portion of said engagement orifice (62).

18. Element (26) according to one of the preceding claims, wherein at least one of the first locking means, the second locking means and the third locking means is a push button.

19. Windscreen (10) wiper brush (12) or arm (14), **characterized in that** it comprises or carries an element (26) according to one of the preceding claims.
